**Europäisches Patentamt**

(19) **European Patent Office**

**Office européen des brevets**

(11) Numéro de publication: **0 229 554 B1**

(12) **FASCICULE DE BREVET EUROPEEN**

(45) Date de publication du fascicule du brevet:
07.06.89

(51) Int. Cl.⁴: **F16G 3/16**

(21) Numéro de dépôt: 86402689.3

(22) Date de dépôt: 04.12.86

(54) Appareil pour la fixation d'agrafes de jonction sur un tapis transporteur ou similaire.

(30) Priorité: 04.12.85 FR 8517918

(43) Date de publication de la demande:
22.07.87 Bulletin 87/30

(45) Mention de la délivrance du brevet:
07.06.89 Bulletin 89/23

(84) Etats contractants désignés:
DE ES GB

(56) Documents cités:
FR-A- 1 364 286
FR-A- 2 327 451
FR-A- 2 507 728
GB-A- 1 325 063
US-A- 3 142 842

(73) Titulaire: GORO S.A., Avenue de Sylvie,
F-77500 Chelles(FR)

(72) Inventeur: Schick, Jean-François, 75, rue de
l'Assomption, F-75016 Paris(FR)

(74) Mandataire: Tony-Durand, Serge, Cabinet
Tony-Durand 77, rue Boissière, F-75116 Paris(FR)

ACTORUM AG

## Description

La présente invention est relative à la fixation d'une rangée d'agrafes de jonction sur l'extrémité d'un tapis transporteur ou similaire.

Plus précisément elle concerne la fixation des agrafes du type constitué par des éléments en U adaptés à être disposés à cheval sur une telle extrémité pour y être fixés au moyen de crampons, en fil métallique, affectant la forme d'un U renversé. Cette fixation est assurée par enfoncement de ces crampons à travers des trous prévus dans les deux branches de ces agrafes, puis rabattement des pointes ressortant au-dehors de celles-ci.

Pour faciliter la pose de telles agrafes, celles-ci affectent initialement une forme en V, l'une de leurs branches étant écartée de sa position normale. Dans ces conditions, après avoir placé l'extrémité d'un tapis ou similaire entre les agrafes de la rangée à fixer en place, il faut tout d'abord rabattre la branche initialement ouverte de celles-ci avant de procéder à l'enfoncement des crampons de fixation et au rabattement de leurs pointes.

Il existe actuellement un certain nombre d'appareils conçus pour réaliser ces différentes opérations. A cet effet, ces appareils comportent deux mâchoires mobiles en sens inverse, ou bien un poinçon d'enfoncement et une enclume, également montés mobiles en sens inverse. Ces organes sont actionnés par un mécanisme de commande relativement complexe, susceptible d'assurer successivement les différents mouvements nécessaires pour réaliser les opérations prévues, à savoir :

fermeture de la branche ouverte des agrafes, puis enfoncement des crampons de fixation et enfin rabattement de leurs pointes libres. Du fait même de la complexité de leur mécanisme de commande, ces appareils constituent en réalité des machines lourdes et encombrantes qui peuvent difficilement être utilisées au fond d'une galerie de mine. Par ailleurs, la relative fragilité de ces appareils est également un grave inconvénient pour leur emploi dans des galeries de mine ou sur des chantiers de travaux publics.

Parmi les appareils actuellement existants, on peut citer celui décrit dans le Brevet FR 2.327.451. Cet appareil comporte une tête de travail comprenant des mâchoires d'enfoncement actionnées par un mécanisme de commande à levier. De plus, il est prévu des outils de pliage destinés à replier les extrémités libres des crampons de fixation, ces outils étant déplacés transversalement à la direction d'enfoncement. Cependant, le mécanisme de commande prévu dans cet appareil est particulièrement complexe, ce qui entraîne les inconvénients exposés précédemment.

Quant au brevet FR 2.507.728, il décrit un appareil dans lequel il est prévu un couvercle mobile, de même longueur que la rangée des agrafes à fixer en place, et qui est destiné à être serré contre la branche ouverte de celles-ci, afin d'assurer simultanément la fermeture de toutes les agrafes. Ce couvercle comporte une série d'ouvertures destinées à recevoir la tête des crampons de fixation qui se trouvent montés en attente sur la branche des agrafes, ces ouvertures pouvant recevoir ultérieurement un poinçon pour l'enfoncement des crampons les uns à la suite des autres. Lors de cette opération les pointes de ces derniers subissent un début de rabattement après avoir traversé les agrafes et ce, grâce à des rainures à fond incliné prévues sur une enclume fixe située sous l'ensemble. Cependant, il est ensuite nécessaire de disposer les agrafes sur une autre enclume de surface lisse, afin de pouvoir procéder à l'achèvement du rabattement des pointes du crampon. Ceci complique donc l'existence des opérations à effectuer.

C'est pourquoi la présente invention a pour but de réaliser un appareil conçu à la fois pour comporter un mécanisme de commande aussi simple que possible et pour être d'un emploi très facile. De plus, la conception de cet appareil est telle que celui-ci puisse être aisément transporté et utilisé au fond d'une galerie de mine ou en tout autre lieu.

A cet effet, cet appareil, qui est destiné à assurer la fixation, sur l'extrémité d'un tapis transporteur, d'une rangée d'agrafes de jonction dotées de crampons de fixation disposés en attente, comporte un tête de travail coulissant le long d'une plaque de guidage de ces crampons et comportant, de part et d'autre de la rangée d'agrafes à fixer, un poinçon d'enfoncement des crampons et une matrice mobile destinée à assurer le rabattement des pointes de ceux-ci, ainsi qu'un cliquet d'avancement assurant le déplacement, pas à pas, de la tête de travail en regard des différentes agrafes à fixer.

Or cet appareil est caractérisé en ce que la matrice mobile de sa tête de travail comprenant deux parties distinctes, à savoir une première partie disposée en regard du poinçon d'enfoncement des crampons de fixation et qui comporte des rainures à fond incliné aptes à assurer le début de rabattement des pointes des crampons de fixation d'une agrafe déterminée, et une seconde partie présentant des rainures de sertissage des pointes des crampons de l'agrafe suivante qui ont déjà subi un début de rabattement, il est prévu, en regard de cette seconde partie de la matrice, un second poinçon destiné à pénétrer dans l'ouverture correspondante de la plaque de guidage des crampons à la fois pour immobiliser la tête de travail dans la position exacte voulue, et pour servir d'enclume d'appui contre la tête des crampons correspondants lors du sertissage final de leurs pointes, ce second poinçon étant actionné par un levier actionnant également le cliquet d'avancement, cependant qu'un autre levier assure la commande du poinçon d'enfoncement et celle de la matrice.

Ainsi, dans chacune de ses positions, la tête de travail permet de réaliser, sur une agrafe déterminée, l'achèvement du rabattement de la pointe des crampons correspondant de fixation et, sur l'agrafe suivante, la fermeture de la branche initialement ouverte de cette agrafe, puis l'enfoncement des crampons correspondants et le début de rabattement de la pointe de ces derniers. L'achèvement de ce rabattement est ensuite réalisé lorsque la tête de travail est amenée dans la position suivante, et ainsi de suite.

Selon une autre caractéristique du présent appareil, le levier de manoeuvre du poinçon d'enfoncement et de la matrice mobile est relié à ces deux organes par des moyens mécaniques de commande assurant successivement le déplacement de la matrice mobile vers le tapis transporteur pendant la première partie du mouvement imprimé au levier de manoeuvre, puis le déplacement du poinçon d'enfoncement pendant la seconde partie de ce mouvement.

Cependant, d'autes particularités et avantages de l'appareil selon l'invention apparaitront au cours de la description suivante d'un exemple de réalisation de celui-ci. Cette description est donnée en référence au dessin annexé à simple titre indicatif et sur lequel :

La figure 1 est une vue en perspective d'ensemble du présent appareil.

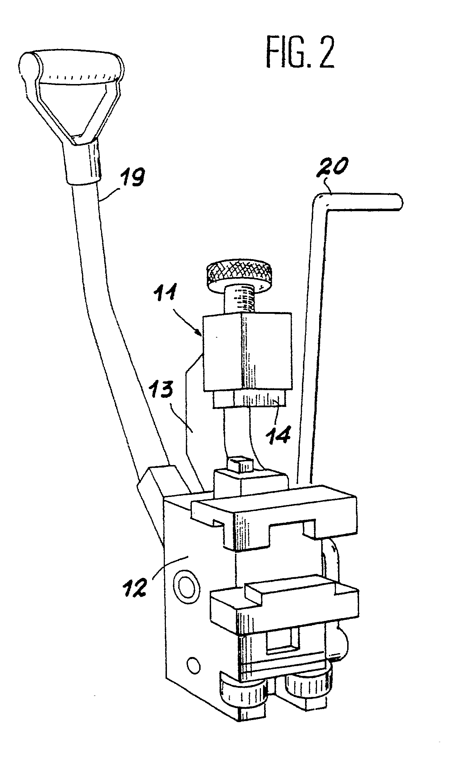

La figure 2 est une vue en perspective de la tête de travail de cet appareil.

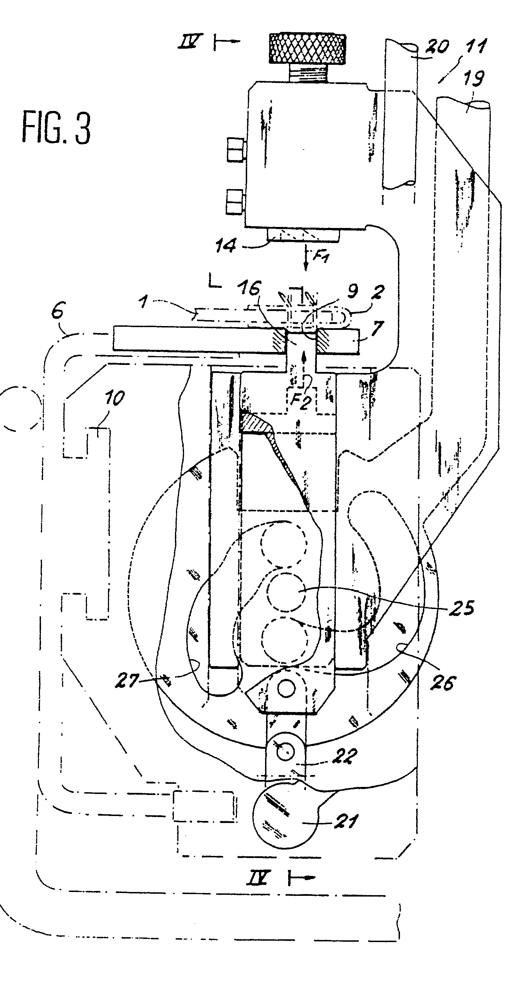

La figure 3 est une vue en élévation de côté de cette tête de travaiL.

La figure 4 est une vue en coupe selon la ligne IV-IV de la figure 3

Les figures 5 à 7 sont des vues partielles schématiques en coupe longitudinale de la rangée d'agrafes illustrant trois opérations successives réalisées dans une même position de la tête de travail.

La figure 8 est une vue similaire illustrant le déplacement de cette tête dans la position immédiatement suivante.

Les figures 9 à 11 sont des vues schématiques en coupe transversale, respectivement suivant les lignes IX-IX de la figure 5, X-X de la figure 6 et XI-XI de la figure 7, illustrant trois opérations distinctes effectuées successivement sur une même agrafe dans une position déterminée de la tête de travail.

La figure 12 est une vue schématique en coupe transvervale selon la ligne XII-XII de la figure 6 qui illustre l'opération de rabattement final des pointes des crampons sur l'agrafe située immédiatement derrière la précédente.

La figure 13 est une vue, partie en perspective et partie en coupe, d'une forme particulière de réalisation de la plaque de guidage des crampons de fixation lors de leur enfoncement.

La figure 14 en est une vue partielle en coupe transversale selon la ligne XIV-XIV de la figure 13.

La figure 15 est une vue partielle en coupe horizontale selon la ligne XV-XV de la figure 14.

Comme déjà indiqué, le présent appareil est conçu de façon à assurer les différentes opérations nécessaires pour la fixation, sur l'extrémité d'un tapis transporteur 1, d'une rangée d'agrafes 2 destinées à permettre la jonction de celle-ci avec une autre extrémité de ce tapis. Les agrafes à fixer en place sont du type constitué par des éléments en forme de U comportant deux branches 2a et 2b reliées par des charnons 3 aptes à être réunis, au moyen d'un axe, avec les charnons d'une autre rangée similaire d'agrafes de jonction. L'une des deux branches de ces agrafes, en l'occurrence leur branche 2a, porte deux crampons de fixation 3 en fil métallique ayant chacun la forme d'un U renversé.

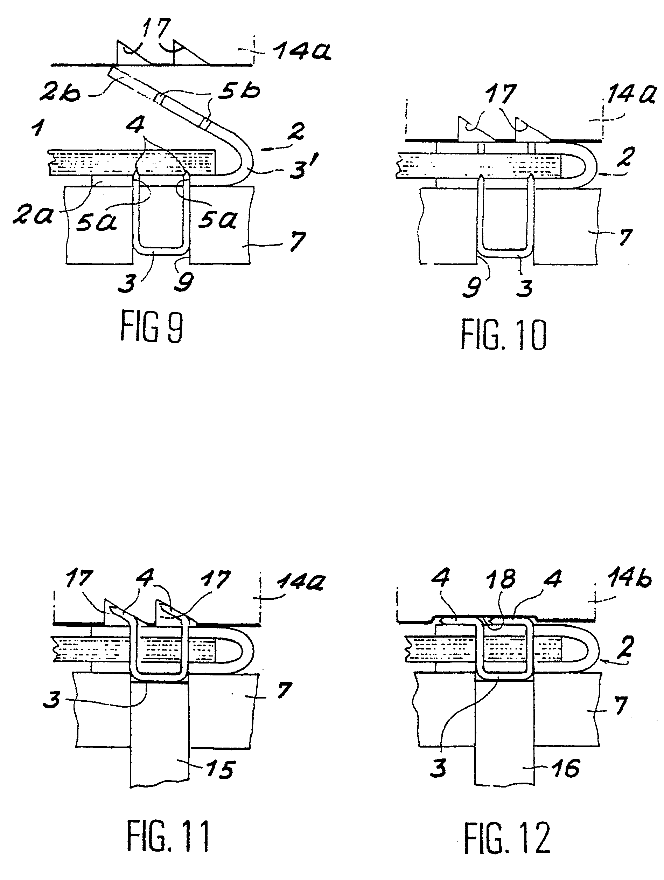

Ces crampons sont alors montés en attente d'utilisation, c'est-à-dire que leurs pointes 4 sont engagées à l'intérieur des trous de passage 5a prévus dans la branche considérée des agrafes. Ces crampons sont donc disposés en saillie à l'extérieur des agrafes (voir figure 9). Quant à la branche opposée 2b de ces dernières, elle affecte alors une forme "ouverte", c'est-à-dire qu'elle se trouve placée dans une position écartée de sa position normale dans laquelle elle sera disposée parallèlement à l'autre branche.

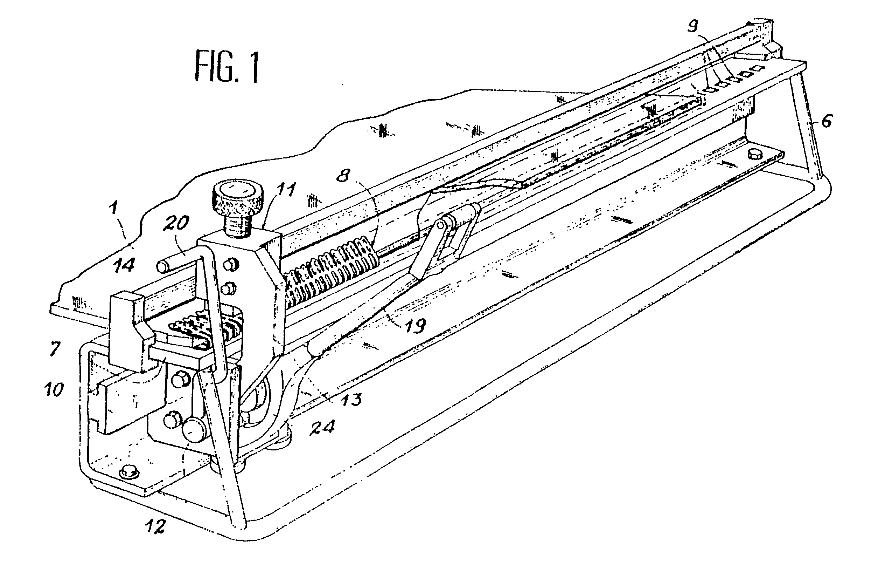

Le présent appareil comporte un bâti 6 supportant une plaque 7 destinée à servir de support à la rangée 8 d'agrafes qui doit être fixée sur le bord du tapis 1. En conséquence, la longueur du bâti 6 et de la plaque 7 est légèrement supérieure à la largeur du tapis 1 pour permettre la mise en place de l'extrémité de ce tapis sur la plaque 7 comme représenté sur la figure 1, les agrafes 2 étant alors disposées à cheval sur le bord de ce tapis.

Cependant, la plaque 7 a également pour fonction d'assurer le guidage des crampons 3 de fixation lors de l'enfoncement. A cet effet, elle comporte une série d'ouvertures 9 destinées à recevoir chacune les deux crampons 3 disposés en attente sur la branche 2a d'une agrafe déterminée. Dans ces conditions, il convient de placer le tapis 1 et la rangée 8 d'agrafes en orientant ces dernières de façon que leur branche 2a se trouve placée vers le bas afin de pouvoir engager les crampons 3 à l'intérieur des ouvertures 9 de la plaque 7 de guidage. Ceci détermine du reste une position rigoureusement précise des agrafes.

Le bâti 6 supporte aussi un rail 10 sur lequel coulisse la tête de travail du présent appareil, celle-ci étant désignée par la référence générale 11. Le corps 12 de cette tête est disposé au dessous de la plaque de guidage 7. Mais elle comporte un coulisseau vertical 13 en forme de col de cygne dont l'extrémité supérieure se trouve disposée au-dessus de la rangée 8 d'agrafes. L'extrémité supérieure de ce coulisseau porte une matrice mobile 14 destinée à être serrée sur le dessus des agrafes et qui sera décrite en détail par la suite.

Quant au corps inférieur 12 de la tête de travail, il porte deux poinçons, respectivement 15 et 16, dont le premier est destiné à assurer l'enfoncement des crampons 3 d'une agrafe déterminée dans chacune des positions de travail de la tête 11. Quant au second poinçon 16, il est destiné à jouer deux fonctions différentes, à savoir : tout d'abord, la fonction d'immobiliser exactement la tête 11 dans chacune de ses positions successives de travail, et ensuite, la fonction de servir d'enclume d'appui pour la tête des crampons 3 d'une agrafe lors du rabattement final de la pointe de ces mêmes crampons.

Ces deux poinçons 15 et 16 sont disposés en regard de deux parties distinctes 14a et 14b de la matrice 14. La première partie 14a, qui est située en regard du poinçon d'enfoncement 15, comporte des rainures 17 relativement profondes et qui présentent un fond incliné de façon à être en mesure d'assurer un début de rabattement des pointes 4 des crampons 3, lorsque ces derniers sont enfoncés à travers une agrafe déterminée 2. Ainsi, ces pointes se trouvent alors inclinées à 45°, comme représenté sur la figure 11. Quant à la seconde partie 14b de la matrice 14, elle comporte deux rainures 18 de faible profondeur et dont le fond est parallèle à la face externe de la matrice. Ces rainures sont ainsi aptes à assurer le rabattement final des pointes 4 des crampons après que celles-ci aient déjà été inclinées à 45°, comme représenté sur la figure 11. Lors de cette opération, le second poinçon 16 joue le rôle d'une enclume contre laquelle s'appuie la tête des crampons correspondants.

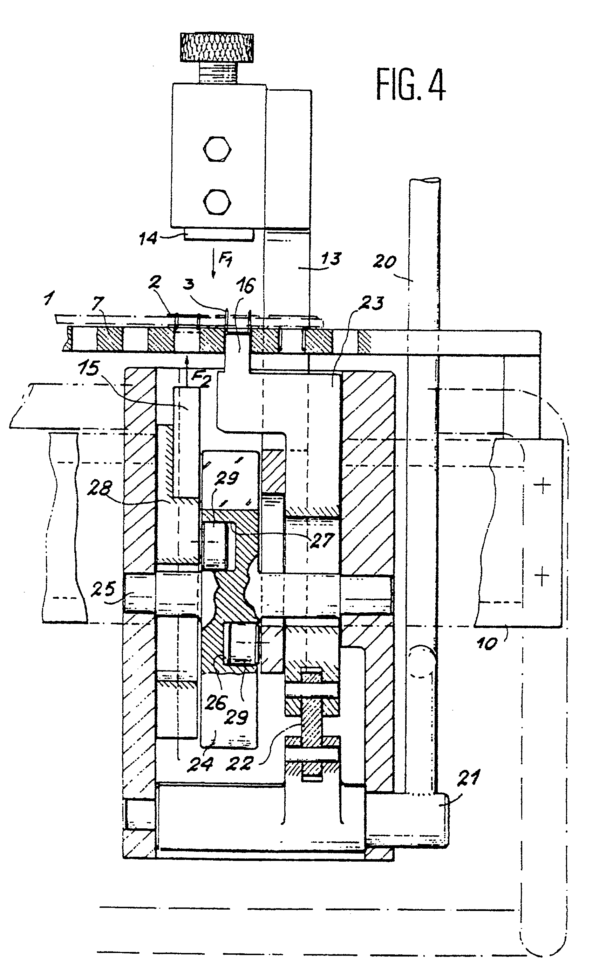

La tête de travail 11 comporte deux leviers de commande, respectivement 19 et 20. Le premier de ceux-ci commande à la fois les déplacements de la matrice supérieure 14 et ceux du premier poinçon 15 assurant l'enfoncement des crampons 3. Quant au second levier 20, il effectue à la fois la commande du second poinçon 16 et d'un cliquet (non représenté) assurant l'avance, pas à pas, de la tête de travail 11 d'une position de travail à la suivante. L'agencement mécanique est tel que ce second levier agit tout d'abord sur le cliquet d'avance, puis sur le second poinçon 16. A cet effet, l'extrémité inférieure de ce levier est fixée sur un arbre rotatif 21 accouplé, par l'intermédiaire d'un mécanisme 22 à genouillère, avec un coulisseau 23 portant le second poinçon 16 (voir figure 4).

Quant au premier levier 19, il est solidaire d'un plateau vertical 24 monté rotatif autour d'un axe 25. Sur l'une et l'autre de ses faces, ce plateau comporte deux gorges 26 et 27 destinées à servir de cames de commande, respectivement pour le coulisseau 13 portant la matrice supérieure 14, et pour un coulisseau 28 portant le premier poinçon 15 d'enfoncement des crampons. Dans ces deux gorges sont engagées des galets 29 portés par l'une et l'autre de ces deux pièces. Or, le profil de ces deux gorges 26 et 27 est tel que, lors de sa manoeuvre, le premier levier 19 agit tout d'abord uniquement sur le coulisseau 13 pour le faire descendre selon la flèche F1 vers le tapis transporteur, puis sur le coulisseau 28 pour relever le poinçon 15 selon la flèche F2. Cependant, lors de cette seconde phase, l'agencement est tel que le coulisseau 13 reste maintenu vers le bas, ce qui assure l'application de la matrice 14 sur la branche supérieure des agrafes correspondantes 2.

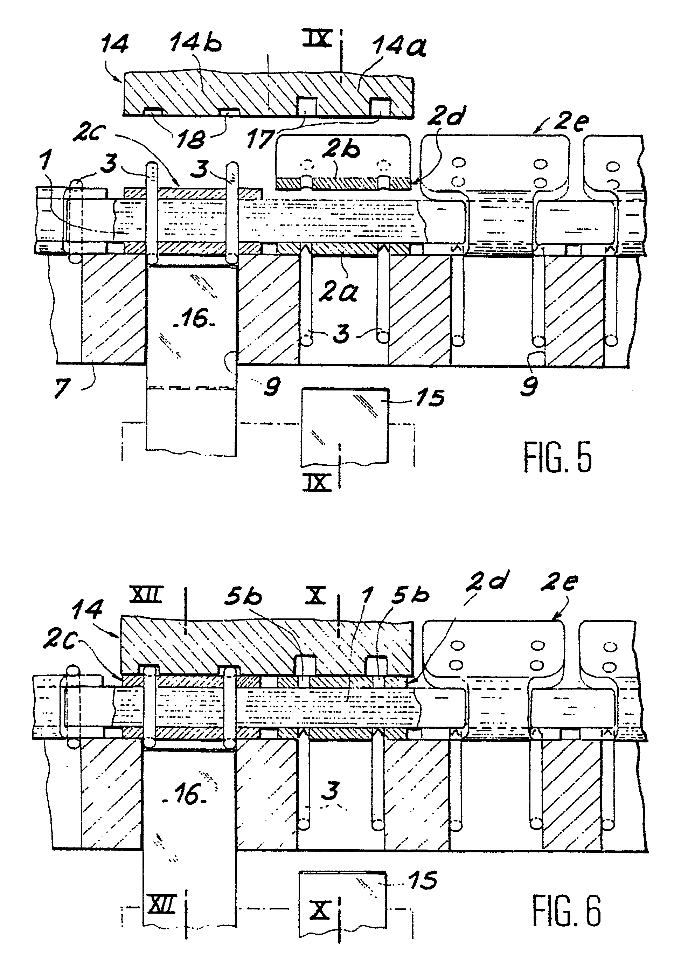

Après que l'extrémité du tapis transporteur 1 ait été disposée sur la plaque de guidage 7 avec une rangée 8 d'agrafes, comme représenté sur la figure 1, il convient de déplacer pas à pas la tête de travail 11 pour procéder à la fermeture des agrafes et à la fixation des crampons 3. Comme déjà indiqué, la tête de travail permet de réaliser, dans chacune de ses positions, des opérations successives différentes sur deux agrafes adjacentes. Ces opérations sont décrites ci-dessous en partant de la situation illustrée à la figure 5.

**1o - Avance et immobilisation de la tête de travail dans une nouvelle position (figure 5) :**

A cet effet, il convient d'agir sur le second levier 20. Ceci provoque l'avance de la tête de travail d'un pas au moyen du cliquet d'avancement, puis l'immobilisation de cette tête de travail dans une nouvelle position précise de travail et ce, par enfoncement du second poinçon 16 dans l'ouverture 9 de la plaque de guidage 7, à l'intérieur de laquelle se trouvant précédemment engagé le poinçon d'enfoncement 15.

Comme représenté sur la figure 5, le second poinçon 16 se trouve alors amené et maintenu dans une position de relèvement dans laquelle il est susceptible de servir d'enclume d'appui pour la tête des crampons 3 de l'agrafe correspondante 2c, crampons dont les pointes ont déjà subi précédemment un début de rabattement à 45°.

Il convient de noter que l'agrafe 2b, située immédiatement en avant de la précédente (si l'on considère le sens de déplacement F de la tête de travail) ,est encore dans son état initial, sa branche supérieure étant alors relevée en position d'ouverture, cependant que ses crampons de fixation 3 sont en attente d'enfoncement.

**2o - Rabattement final des pointes des crampons sur une agrafe et fermeture de l'agrafe voisine (figure 6) :**

En agissant ensuite sur le premier levier de commande 19, l'opérateur assure, dans un premier temps, la descente de la matrice 14 selon la flèche F1.

Ceci a pour effet de réaliser deux opérations différentes sur l'une et l'autre des deux agrafes qui se trouvent alors à l'intérieur de la tête de travail, à savoir :

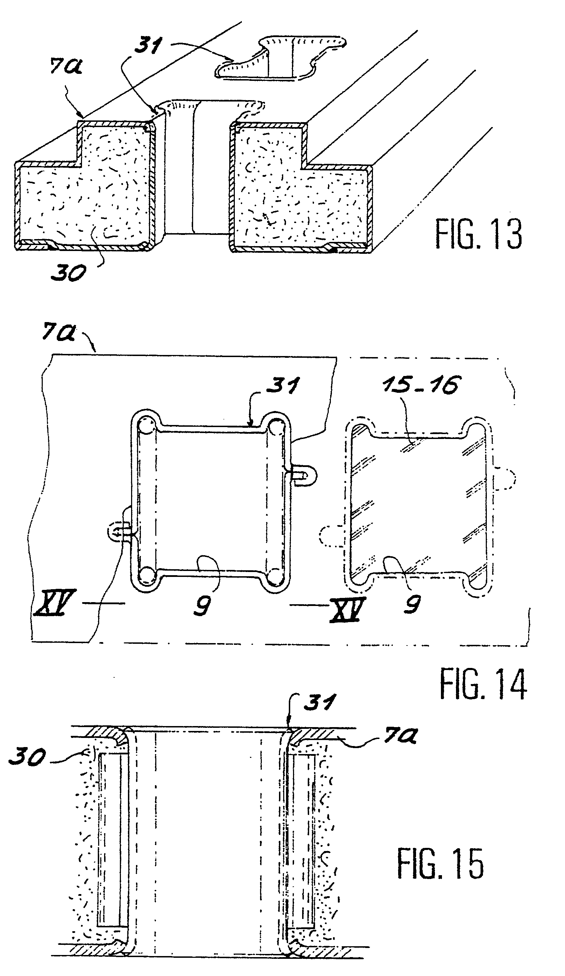

a) sur l'agrafe 2c, qui se trouve située vers l'arrière, la partie correspondante 14b de la matrice 14 assure le rabattement final des pointes 4 des crampons correspondants 3, et ce grâce aux rainures 18 (voir figure 13). Le poinçon 16 joue alors le rôle d'une enclume d'appui pour la tête de ces crampons.

b) sur l'agrafe 2d qui est située vers l'avant, la descente de la matrice 14 a pour effet de rabattre la branche supérieure 2b de cette agrafe contre le tapis 1, de sorte que les trous de passage 5b prévus dans cette branche se trouvent désormais situés en regard des pointes des crampons correspondants 3 (voir figure 10).

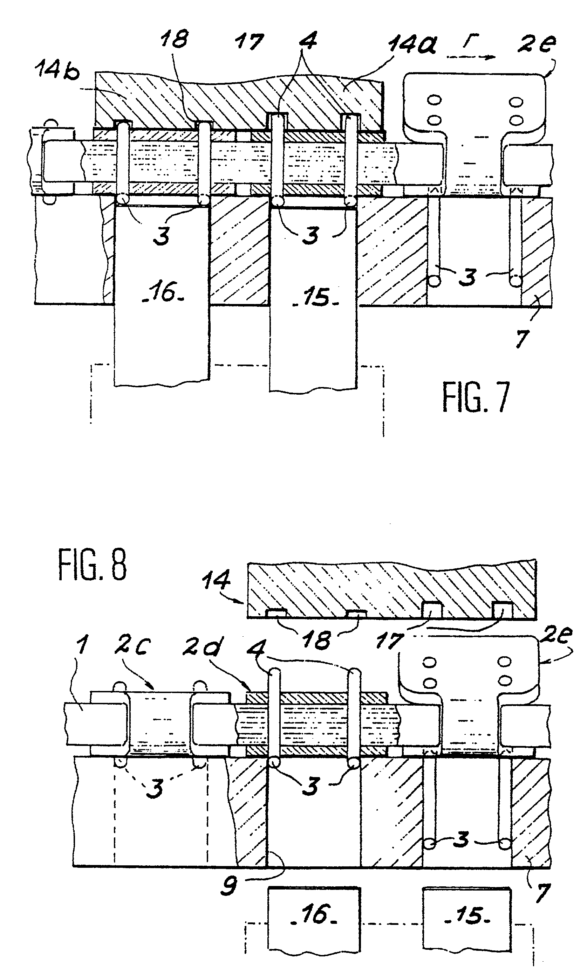

**3o - Enfoncement des crampons et début de rabattement de leurs pointes (figure 7) :**

Dans la seconde partie de son mouvement, le premier levier 19 commande le relèvement du poinçon 15 selon la flèche F2. Dans ces conditions, celui-ci s'engage dans l'ouverture 9 de la plaque de guidage 7, qui est située en regard de celui-ci, et il repousse ainsi les crampons correspondants 3 en enfonçant leurs pointes à travers le tapis transporteur 1.

Les pointes de ces crampons sont ainsi amenées à ressortir à travers les trous 5b de la branche supérieure 2b de l'agrafe 2d.

Dans ces conditions, ces pointes 4 pénètrent dans les rainures 17 de la partie correspondante 14a de la matrice. En raison de l'inclinaison du fond de ces rainures, ceci provoque un coude à 45° des pointes des crampons, et donc un début de rabattement, comme représenté à la figure 11.

### 4o - Changement de position de la tête de travail (figure 8) :

Après achèvement des opérations décrites ci-dessus, l'opérateur ramène le levier 19 dans sa position de repos, ce qui assure le soulèvement de la matrice 14 et la descente du poinçon d'enfoncement 15. Il agit ensuite sur le second levier 20 pour commander l'avance de la tête de travail d'un pas.

Cette avance est réalisée pendant la première partie du mouvement du levier 20 qui, en actionnant le cliquet d'avancement (non représenté), assure le déplacement de la tête de travail selon la flèche F d'une distance juste suffisante pour que le poinçon d'enfoncement 15 se trouve situé en regard de l'agrafe 2e qui fait immédiatement suite à l'agrafe 2d et qui n'a encore subi aucune opération de fermeture ou de fixation.

Comme représenté sur la figure 8, le second poinçon 16 se trouve alors situé en regard de l'agrafe 2d sur laquelle les pointes 4 des crampons de fixation ont déjà subi un début de rabattement. Ce poinçon 16 est alors prêt à s'engager dans l'ouverture correspondante de la plaque de guidage 7 pour réaliser l'opération d'immobilisation décrite précédemment au paragraphe 1 ci-dessus, et ainsi de suite.

Comme on peut le constater, le présent appareil est d'une utilisation très facile puisqu'il suffit de manoeuvrer successivement les deux leviers de commande 20 et 19 afin de réaliser toutes les opérations nécessaires pour obtenir la fermeture d'une agrafe puis l'enfoncement des crampons correspondants de fixation et le rabattement de leurs pointes en deux phases. Or, ces opérations sont obtenues sans avoir à retirer, en cours d'exécution, le tapis transporteur, pour placer une enclume différente, comme cela doit être le cas avec certains appareils existant actuellement. Par ailleurs, le mécanisme de commande de la matrice mobile et des poinçons d'enfoncement est relativement simple et de fonctionnement très efficace. De plus, la commande des différentes opérations au moyen des deux leviers 19 et 20, et non d'un seul, assure une répartition optimum des efforts, en évitant à l'opérateur d'avoir à exercer des efforts importants pour l'utilisation de l'appareil. Enfin, la conception de cet appareil permet de limiter l'encombrement et le poids de l'ensemble de sorte que cet appareil peut être aisément transporté sur le lieu d'utilisation, même s'il s'agit du fond d'une galerie de mine.

Bien entendu, l'appareil selon l'invention n'est pas limité à l'exemple de réalisation décrit précédemment. Ainsi, il est bien évident que les organes mécaniques de commande des outils mobiles de travail pourraient être remplacés par des organes différents susceptibles de jouer la même fonction, c'est-à-dire celle d'actionner en deux temps les organes respectifs à commander, à savoir : la matrice 14 puis le poinçon d'enfoncement 15 en ce qui concerne le levier 19, et le cliquet d'avancement, puis le second poinçon 16 d'immobilisation, en ce qui concerne le levier 20.

Les figures 13 à 15 représentent une forme particulière de réalisation de la plaque de guidage des crampons, laquelle est conçue dans le but de réduire encore le poids de l'appareil. Dans cette forme de réalisation cette plaque de guidage est constituée par une enveloppe métallique 7a, renfermant une garniture 30 en matière plastique alvéolaire. Les ouvertures 9a de guidage prévues dans cette plaque sont matérialisées par des cheminées formées par deux pièces 31 en tôle, solidarisées l'une avec l'autre, et dont les extrémités sont serties sur l'une et l'autre faces de l'enveloppe métallique 7a. Ces différentes cheminées sont mises en place dans cette enveloppe avant remplissage de celle-ci par la garniture 30 en matière plastique.

La structure ainsi prévue permet de réaliser une plaque 7a de grande épaisseur susceptible de jouer parfaitement son rôle de plaque de guidage des crampons 3, sans qu'elle présente un poids important. En effet, la présente plaque à l'avantage d'être très légère, ce qui réduit considérablement le poids de l'ensemble de l'appareil et facilite en conséquence sa manipulation ainsi que son transport. Cependant, cette plaque a de plus l'avantage d'être aussi rigide qu'une plaque métallique de même épaisseur.

Eventuellement, une telle plaque de guidage peut être réalisée en s'abstenant de prévoir les cheminées intérieures 31. Dans un tel cas, la plaque de guidage est constituée simplement par l'enveloppe métallique externe 7a et la garniture interne 30 en matière plastique alvéolaire. Avant remplissage de l'enveloppe externe 7a par la garniture 30, il convient de placer momentanément, à travers les ouvertures des deux faces de cette enveloppe, autant de poinçons de remplissage destinés à réserver des passages libres susceptibles de constituer les conduits de guidage prévus dans une telle plaque. Eventuellement les bords des ouvertures ménagées sur les deux faces de l'enveloppe externe peuvent être rabattus vers l'intérieur de la plaque pour former des collets de guidage des crampons lors de leur enfoncement.

### Revendications

1. Appareil portatif pour la fixation, sur l'extrémité d'un tapis transporteur (1), d'une rangée (8) d'agrafes de jonction (2) dotées de crampons de fixation (3) disposés en attente, au moyen d'une tête de travail montée coulissante le long d'une plaque de guidage (7) de ces crampons (3) et comportant, de part et d'autre de la rangée (8) d'agrafes (2) à fixer, un poinçon (15) d'enfoncement des crampons et une matrice mobile (14) destinée à asurer le rabattement des pointes (4) de ceux-ci, ainsi qu'un cliquet d'avancement assurant le déplacement, pas à pas, de la tête de travail en regard des différentes agrafes à fixer, caractérisé en ce que la matrice mobile (14) comportant deux parties distinctes, à savoir une première partie (14a) disposée en regard du poinçon (15) d'enfoncement des crampons (3) de fixation et qui comporte des rainures (17) à fond incliné aptes à assurer le début de rabattement des pointes (4) des crampons (3) de fixation d'une agrafe déterminée (2d), et une seconde partie (14b) présentant des rainures (18) de sertissage des pointes (4) des crampons de l'agrafe suivante (2c) qui ont déjà subi un début de rabattement, il est prévu, en regard de cette seconde partie de la matrice, un second poinçon (16) destiné à pénétrer dans l'ouverture correspondante (9) de la plaque (7) de guidage des crampons à la fois pour immobiliser la tête de travail (11) dans la position exacte voulue, et pour servir d'enclume d'appui contre la tête des crampons correspondants lors du sertissage final de leurs pointes, ce second poinçon étant actionné par un levier (20) actionnant également le cliquet d'avancement, cependant qu'un autre levier (19) assure la commande du poinçon d'enfoncement (15) et celle de la matrice( 14).

2. Appareil de fixation selon la revendication 1, caractérisé en ce que le levier (19) de commande du poinçon (15) d'enfoncement et de la matrice mobile (14) est relié à ces deux organes par des moyens mécaniques de liaison assurant successivement le déplacement de la matrice mobile pendant la première partie de son mouvement, puis le déplacement du poinçon d'enfoncement pendant la seconde partie de ce même mouvement.

3. Appareil de fixation selon l'une des revendications précédentes, caractérisé en ce que le levier (20) de commande du cliquet d'avancement et du second poinçon (16) de la tête de travail, est relié à ces deux organes par des moyens mécaniques de liaison assurant successivement le déplacement du cliquet d'avancement puis celui du second poinçon (16) destiné à servir d'organe d'immobilisation de la tête de travail (11) ainsi que d'enclume pour la tête des crampons de fixation (3) de l'une des agrafes situées à l'intérieur de cette tête.

4. Appareil de fixation selon l'une des revendications précédentes, caractérisé en ce que le corps (12) de la tête mobile de travail (11) se trouvant située en regard de la face de la plaque de guidage (7) opposée à celle servant de support à la rangée d'agrafes (2) à fixer, la matrice mobile (14) est portée par l'extrémité libre d'un coulisseau (13) dont l'extrémité opposée est actionnée par les moyens mécaniques de commande prévus dans le corps (12) de la tête de travail.

5. Appareil de fixation selon les revendications 2 et 4, caractérisé en ce que le déplacement du poinçon (15) d'enfoncement des crampons et le déplacement du coulisseau (13) portant la matrice mobile (14) sont commandés par deux cames (27, 26) prévues sur un plateau rotatif (24) solidaire du levier de commande correspondant (19).

6. Appareil de fixation selon l'une des revendications précédentes, caractérisé en ce que la plaque (7) de guidage des crampons (3), lors de leur enfoncement, est constituée par une enveloppe métallique (7a) renferment une garniture (30) en matière plastique alvéolaire, des conduits de guidage des crampons étant ménagés dans l'épaisseur de la plaque ainsi constituée.

7. Appareil de fixation selon la revendication 6, caractérisé en ce qu'à l'endroit des conduits de guidage ménagés dans l'épaisseur de la plaque de guidage des crampons, il est prévu des cheminées (31) en métal ou autre matière appropriée.

## Claims

1. Portable apparatus for fastening on the end of a conveyor belt (1) a row (8) of fastening elements (2) provided with fixing staples (3) placed in a standby position, by means of an operating head slidably mounted on a plate (7) for guiding these staples (3) and provided on each side of the row (8) of fastening elements (2) to be attached with a staple-inserting punch (15) and a movable die (14) for clinching the pointed ends (4) of these staples as well as a ratchet mechanism for producing step-by-step motion of the operating head opposite to the different fastening elements to be attached, characterized in that the movable die (14) is made up of two separate and distinct portions, namely a first portion (14a) which is placed opposite to the punch (15) for insertion of the fixing staples (3) and provided with grooves (17) having sloping bottom faces for initial clinching of the pointed ends (4) of the fixing staples (3) of a predetermined fastening element (2d), and a second portion (14b) provided with grooves (18) for final clinching of the pointed ends (4) of the staples of the following fastening element (2c) which have already been subjected to initial clinching, and provision is made opposite to this second portion of the die for a second punch (16) which is intended to penetrate into the corresponding opening (9) of the staple-guiding plate (7) both in order to arrest the operating head (11) in the exact position desired and in order to serve as an anvil for bearing against the heads of the corresponding staples at the time of final clinching of their pointed ends, said second punch being actuated by a lever (20) which also actuates the stepping-motion ratchet mechanism whilst another lever (19) controls the operation of the staple-inserting punch (15) and the operation of the die (14).

2. Fastening apparatus in accordance with claim 1, characterized in that the lever (19) for actuating the staple-inserting punch (15) and the movable die (14) is connected to these two elements by mechanical coupling means for successively producing a displacement of the movable die during the first part of its movement followed by a displacement of the staple-inserting punch during the second part of the same movement.

3. Fastening apparatus in accordance with one of the preceding claims, characterized in that the lever (20) for controlling the stepping-motion ratchet mechanism and the second punch (16) of the operating head is connected to these two elements by mechanical coupling means for successively producing a displacement of the stepping-motion ratchet mechanism followed by a displacement of the second punch (16) having the intended function of immobilizing the operating head (11) while also serving as an anvil for the heads of the fixing staples (3) of one of the fastening elements located within this head.

4. Fastening apparatus in accordance with one of the preceding claims, characterized in that the body (12) of the movable operating head (11) is located in front of the face of the guide-plate (7) opposite to the face which serves as a support for the row of fastening elements (2) to be attached, and the movable die (14) is carried by the free end of a slider (13), the opposite end of which is actuated by the mechanical control means provided within the body (12) of the operating head.

5. Fastening apparatus in accordance with claims 2 and 4, characterized in that the displacement of the staple-inserting punch (15) and the displacement of the slider (13) which carries the movable die (14) are controlled by two cams (27, 26) provided on a rotatable plate (24) which is rigidly fixed to the corresponding control lever (19).

6. Fastening apparatus in accordance with one of the preceding claims, characterized in that the plate (7) for guiding the staples (3) during downward insertion of these latter is formed by a metal casing (7a) which contains a packing (30) of cellular plastic, staple-guiding ducts being provided within the thickness of the plate thus formed.

7. Fastening apparatus in accordance with claim 6, characterized in that, at the location of the guide ducts formed within the thickness of the staple-guiding plate, provision is made for chimneys (31) of metal or other suitable material.

## Patentansprüche

1. Tragbare Vorrichtung zur Befestigung einer Reihe aus Riemenverbindern mit in Bereitschaftslage angeordneten Heftklammern am Ende eines Förderbandes mittels eines längs einer Führungsplatte für diese Heftklammern verschiebbar montierten Arbeitskopfes mit einem Stempel beiderseits der Verbinderreihe zum Eintreiben der Klammern und mit einer bewegbaren Matrize zum Umbiegen der Klammerspitzen sowie mit einer Schaltklinke zum schrittweisen Vorrücken des Arbeitskopfes in bezug auf die verschiedenen, zu befestigenden Riemenverbinder, dadurch gekennzeichnet, daß die bewegbare Matrize (14) zwei unterschiedliche Teile aufweist, und zwar ein dem Eintreibstempel (15) für die Klammern (3) gegenüberliegendes erstes Teil (14a) mit Rillen (17) mit schrägem Grund zur Einleitung des Umbiegens der Klammerspitzen (4) eines bestimmten Riemenverbinders (2d) und ein zweiter Teil (14b), mit Rillen (18) zum Festdrücken der Klammerspitzen (4) des nachfolgenden Riemenverbinders, bei denen das Umbiegen bereits eingeleitet wurde, und daß gegenüber diesem zweiten Matrizenteil ein zweiter Stempel (16) vorgesehen ist, welcher in die entsprechende Öffnung (9) der Führungsplatte (7) der Klammern eingebracht wird, um den Arbeitskopf (11) genau in der gewünschten Position festzuhalten und gleichzeitig als Widerlager für den Kopf der entsprechenden Klammern während des abschließenden Festdrückens ihrer Spitzen zu dienen, wobei dieser zweite Stempel durch einen Hebel (20) betätigt wird, welcher ebenfalls die Schaltklinke für den Vorschub betätigt, während zur Steuerung des Eintreibstempels (15) und der Matrize (14) ein weiterer Hebel (19) vorgesehen ist.

2. Vorrichtung nach Anspruch 1, dadurch gekennzeichnet, daß der Steuerungshebel (19) für den Eintreibstempel (15) und die bewegbare Matrize (14) mit diesen beiden Organen über mechanische Verbindungselemente derart verbunden ist, daß während des ersten Teiles der Hebelbewegung eine Verschiebung der Matrize und danach während des zweiten Teiles der Hebelbewegung eine Verschiebung des Eintreibstempels erzielbar ist.

3. Vorrichtung nach einem der vorangehenden Ansprüche, dadurch gekennzeichnet, daß der Hebel (20) zur Bedienung der Vorschubschaltklinke und des zweiten Stempels (16) des Arbeitskopfes mit diesen beiden Organen über mechanische Verbindungselemente derart verbunden ist, daß die Verschiebung der Vorschubschaltklinke und danach die Verschiebung des zweiten Stempels (16) erzielbar ist, wobei letzterer als Halteorgan für den Arbeitskopf (11) sowie als Widerlager für den Kopf der Halteklammern (3) eines im Arbeitskopf liegenden Riemenverbinders dient.

4. Vorrichtung nach einem der vorangegangenen Ansprüche, dadurch gekennzeichnet, daß der Körper (12) des bewegbaren Arbeitskopfes (11) der Fläche der Führungsplatte (7) gegenüberliegt, welche von der Fläche abgewandt ist, die als Stütze für die zu befestigende Riemenverbinderreihe dient, und daß die bewegbare Matrize (14) vom freien Ende eines Schiebers (13) getragen wird, dessen entgegengesetztes durch die im Körper (12) des Arbeitskopfes vorgesehenen Bedienungselemente betätigt wird.

5. Vorrichtung nach Anspruch 2 und 4, dadurch gekennzeichnet, daß die Verschiebung des Eintreibstempels (15) für die Heftklammern und die Verschiebung des die bewegbare Matrize (14) tragenden Schiebers (13) durch zwei Nocken (27, 26) gesteuert werden, welche auf einer Drehplatte (24) an dem entsprechenden Bedienungshebel (19) vorgesehen sind.

6. Vorrichtung nach einem der vorangehenden Ansprüche, dadurch gekennzeichnet, daß die Führungsplatte (7) für die Heftklammern (3) während ihres Eintreibens durch eine Metallhülle (7a) gebildet wird, welche einen Kern (30) aus Schaumstoff umschließt, und in der Dicke der derart ausgebildeten Platte Kanäle zur Führung der Heftklammern ausgebildet sind.

7. Vorrichtung nach Anspruch 6, dadurch gekennzeichnet, daß an den Stellen der in der Dicke der Führungsplatte für die Heftklammern ausgebildeten Führungskanäle Schächte (31) aus Metall oder einem anderen geeigneten Werkstoff vorgesehen sind.

FIG. 1

EP 0 229 554 B1

FIG. 2

**FIG. 3**

FIG. 4

FIG. 5

FIG. 6

FIG. 7

FIG. 8

FIG 9

FIG. 10

FIG. 11

FIG. 12

FIG. 13

FIG. 14

FIG. 15